# EUROPEAN PATENT SPECIFICATION

(11) **EP 3 070 327 B1**
(45) Date of publication and mention of the grant of the patent: **18.07.2018**
(21) Application number: 15196864.1
(22) Date of filing: 27.11.2015
(51) Int. Cl.: F03D 7/02, F03D 7/04

(54) **WIND TURBINE POWER GENERATION FACILITY AND METHOD OF CONTROLLING THE SAME**
WINDTURBINENSTROMERZEUGUNGSANLAGE UND VERFAHREN ZUR STEUERUNG DAVON
INSTALLATION DE GÉNÉRATION DE PUISSANCE DE TURBINE ÉOLIENNE ET SON PROCÉDÉ DE COMMANDE

(30) Priority: 17.03.2015 JP 2015052819
(43) Date of publication of application: 21.09.2016
(73) Proprietor: MITSUBISHI HEAVY INDUSTRIES, LTD., Tokyo 108-8215 (JP)
(72) Inventor: NAKAMURA, Akihiro, TOKYO, 108-8215 (JP); HAYASHI, Yoshiyuki, TOKYO, 108-8215 (JP)
(74) Representative: Intès, Didier Gérard André

(56) References cited:
- JP-A- 2002 276 535
- XING JIA YAO ET AL: "The neural network self-adaptive algorithm application on mechanism pitch-adjust system of wind turbine", ELECTRICAL MACHINES AND SYSTEMS, 2007. ICEMS. INTERNATIONAL CONFERENCE ON, IEEE, PI, 8 October 2007 (2007-10-08), pages 320-323, XP031823857, ISBN: 978-89-86510-07-2
- Peter Nachtwey: "optimizing closed-loop control in hydraulic motion", , 1 December 2013 (2013-12-01), pages 1-4, XP055285698, Retrieved from the Internet: URL:http://www.techbriefs.com/component/co ntent/article/ntb/features/feature-article s/18803 [retrieved on 2016-07-04]
- COLIN G ANDERSON ET AL: "An Aerodynamic Moment-Controlled Surface for Gust Load Alleviation on Wind Turbine Rotors", IEEE TRANSACTIONS ON CONTROL SYSTEMS TECHNOLOGY, IEEE SERVICE CENTER, NEW YORK, NY, US, vol. 6, no. 5, 1 September 1998 (1998-09-01), XP011013915, ISSN: 1063-6536

## Description

### TECHNICAL FIELD

The present disclosure relates to a wind turbine power generation facility and a method of controlling the same.

### BACKGROUND ART

It is widely known to use a hydraulic cylinder as an actuator that constitutes a pitch driving mechanism for adjusting a pitch angle of a wind turbine blade.

For instance, Patent Document 1 discloses a blade pitch-control device which adjusts a pitch angle of a blade by supplying working oil to a hydraulic cylinder from a hydraulic pump to drive the hydraulic cylinder.

It is further referred to the disclosure of XING JIA YAO ET AL, "The neural network self-adaptive algorithm application on mechanism pitch-adjust system of wind turbine", ELECTRICAL MACHINES AND SYSTEMS, 2007. ICEMS. INTERNATIONAL CONFERENCE ON, IEEE, PI, (20071008), ISBN 978-89-86510-07-2, pages 320 - 323, XP031823857, which discloses a wind turbine comprising a pitch driving part including a hydraulic cylinder and a controller to control the pitch driving part.

Moreover it is referred to Peter Nachtwey, "optimizing closed-loop control in hydraulic motion", (20131201), pages 1 - 4, URL: http://www.techbriefs.com/component/content/article/ntb/features/feature-articles/18803, (20160704), XP055285698, which discloses the use of a second derivative gain in a PID control loop in order to reduce oscillations in a hydraulic servo-system.

JP2002276535 (A) discloses a variable vane mechanism capable of reducing rotating resistance.

### Citation List

### Patent Literature

Patent Document 1: JP5331197B

### SUMMARY

Meanwhile, in some cases, a feedback control based on a difference between an actual value and a target value of the pitch angle is performed to adjust the pitch angle using a hydraulic cylinder. In this case, hunting may occur due to the unstableness of a feedback control circuit, which may cause unstable oscillation in the wind turbine blade or a nacelle. When such unstable oscillation occurs, it may lead to malfunction of a wind turbine. Thus, it is desirable to restrict unstable oscillation of the wind turbine blade pitch.

In view of the above issues, an object of at least one embodiment of the present invention is to provide a wind turbine power generation facility whereby it is possible to restrict unstable oscillation caused by a feedback control for pitch-angle adjustment.
(1) A wind turbine power generation facility according to at least one embodiment of the present invention includes: a wind turbine blade; a pitch driving part which includes a hydraulic device having a hydraulic cylinder, a hydraulic valve, and a pressurized-oil source, and which is configured to change a pitch angle of the wind turbine blade by the hydraulic device; and a controller configured to provide the hydraulic device with a command value to control the pitch driving part so as to adjust the pitch angle. The controller includes: a first-signal calculation part for calculating a first signal based on a difference between a pitch-angle demand value and an actual value of the pitch angle; a second-signal calculation part for calculating a second signal by subtracting a signal based on a pitch-angular acceleration of the wind turbine blade from the first signal; and a command-value calculation part for calculating the command value to be provided to the hydraulic device on the basis of the second signal.

In the feedback control of the pitch angle of the wind turbine blade, a signal that is fed back to the controller is affected by the characteristics of the hydraulic cylinder and the wind turbine blade which are to be controlled. For instance, the feedback signal sent to the controller may contain an oscillation component of a specific natural frequency corresponding to the elasticity of the working oil in the hydraulic cylinder or the inertia of the wind turbine blade. In this case, if a gain in the feedback control is increased, unstable oscillation (oil-column resonance) may occur in the wind turbine blade at the above mentioned natural frequency within a certain range of the pitch angle, and hunting of the pitch angle may occur.

With the above configuration (1), the signal based on the pitch-angular acceleration is subtracted from the first signal possibly containing a component of the unstable oscillation of the wind turbine blade pitch and damping is applied to the pitch control system, which makes it possible to restrict the unstable oscillation.

While it is possible to prevent unstable oscillation of a wind turbine blade without subtracting a signal based on the pitch-angular velocity from a feedback signal as described in the above (1) by making the gain in the feedback control adequately small, the responsibility of the pitch-angle control would decrease in this case. In this regard, with the above configuration (1), it is possible to restrict the unstable oscillation of the wind turbine blade pitch even in a case where the gain in the feedback control is set within a range where the control responsibility can be maintained.
(2) In some embodiments, in the above configuration (1), the wind turbine power generation facility further includes a sensor for measuring the actual value of the pitch angle or a physical amount representing a pitch-angular velocity. The second-signal calculation part is configured to: calculate the pitch-angular acceleration from the actual value or the physical amount; and calculate the second signal by subtracting the signal based on the pitch-angular acceleration from the first signal.
   With the above configuration (2), it is possible to obtain the second signal for restricting the unstable oscillation of the wind turbine blade pitch on the basis of a measurement value of the sensor.
(3) In some embodiments, in the above configuration (2), the sensor is configured to measure a stroke value or a stroke change rate of the hydraulic cylinder, and the second-signal calculation part is configured to calculate the pitch-angular acceleration from the stroke value or the stroke change rate.
   With the above configuration (3), it is possible to obtain the second signal for restricting the unstable oscillation of the wind turbine blade pitch on the basis of a measurement value of the sensor (a stroke value or a stroke change rate of the hydraulic cylinder).
(4) In some embodiments, in any one of the above configurations (1) to (3), the second-signal calculation part is configured to calculate the second differential of the actual value of the pitch angle to obtain the pitch-angular acceleration.
(5) Further, in some embodiments, in the above configuration (2) or (3), the second-signal calculation part is configured to calculate the single differential of the pitch-angular velocity to obtain the pitch-angular acceleration.
   With the above configurations (4) and (5), it is possible to obtain the second signal for restricting the unstable oscillation of the wind turbine blade pitch, on the basis of the pitch-angular velocity obtained by calculating the second differential of the actual value of the pitch angle or the first differential of the pitch-angular velocity.
(6) In some embodiments, in the above configuration (1), the wind turbine power generation facility further includes a pressure sensor for measuring a pressure in the hydraulic cylinder. The second-signal calculation part is configured to: calculate an index indicating the pitch-angular acceleration by dividing a cylinder thrust force calculated from the pressure and a cylinder area by an inertia of a pitch system including the wind turbine blade and at least a part of the pitch driving part; and calculate the second signal by subtracting, from the first signal, the signal based on a result of calculating the index.
   When the force calculated by multiplying the pressure inside the cylinder by the cylinder area is divided by the inertia of the pitch system, the dimension would be the same as that of the acceleration. Thus, when the pressure inside the cylinder is divided by the inertia of the pitch system, an index indicating the pitch-angular acceleration is obtained. With the above configuration (6), it is possible to obtain the second signal for restricting the unstable oscillation of the wind turbine blade pitch on the basis of an index indicating the pitch-angular acceleration which can be obtained by dividing the pressure inside the cylinder by the inertia of the pitch system.
(7) In some embodiments, in any one of the above configurations (2) to (6), the second-signal calculation part is configured to calculate the second signal by filtering a result of calculating the pitch-angular acceleration from the actual value of the pitch angle or the physical amount representing the pitch-angular velocity of the wind turbine blade to eliminate or reduce a frequency component that is not less than a cutoff frequency, and subtracting the filtered signal from the first signal. The cutoff frequency is set to a value larger than a natural frequency of a hydraulically-driven pitch control system including the wind turbine blade, the hydraulic device, and the controller.
   In a case where the signal for applying damping to the pitch control system is obtained on the basis of the pitch-angular acceleration, high-frequency noise of the measurement data may be amplified by differentiating the actual value of the pitch angle measured by a sensor or pitch-angle velocity, for instance. With the above configuration (7), from a signal based on the pitch-angular acceleration that can be obtained from the actual value of the pitch angle or the like, a component having a frequency larger than the natural frequency of the hydraulically-driven pitch control system is eliminated or reduced. Thus, it is possible to eliminate or reduce noise of the higher-frequency region than the natural frequency of the hydraulically-driven pitch control system, and to restrict the unstable oscillation of the wind turbine blade pitch adequately without reducing the signal based on the pitch-angular acceleration in the vicinity of the natural frequency of the hydraulically-driven pitch control system.
(8) In some embodiments, in any one of the above configurations (1) to (7), the hydraulic device further includes an oil tank for storing oil, and a supply line disposed between the pressurized-oil source and the hydraulic cylinder, for supplying the oil stored in the oil tank to the hydraulic cylinder. The hydraulic cylinder includes a first cylinder chamber and a second cylinder chamber and is configured to be capable of switching change of the pitch angle of the wind turbine blade between a change toward a fine side and a change toward a feather side by switching the oil supply between to the first cylinder chamber and to the second cylinder chamber. The hydraulic valve is disposed in the supply line and configured to be capable of adjusting an amount of the oil supplied to the hydraulic cylinder and switching recipient of the oil supply between the first cylinder chamber and the second cylinder chamber.
   With the above configuration (8), since the recipient of oil is switched between the first cylinder chamber and the second cylinder chamber by the hydraulic valve, it is possible to set a direction in which the pitch angle of the wind turbine blade is to be changed (fine side or feather side) optionally. Further, with the above configuration (8), since the amount of oil supply is adjusted using the hydraulic valve, it is possible to adjust the pitch angle of the wind turbine blade by a desirable amount optionally in accordance with the amount of oil supply.
(9) In some embodiments, in any one of the above configurations (2) to (8), the second-signal calculation part is configured to calculate the second signal by subtracting, from the first signal, a signal calculated by multiplying a result of calculating the pitch-angular acceleration from the actual value of the pitch angle or the physical amount representing the pitch-angular velocity by a suitable gain.
   If the gain that is to be multiplied by the signal based on the pitch-angular acceleration is increased, the effect to restrict the unstable oscillation would improve, but the noise derived from the measurement data would be amplified even further. On the other hand, if the gain to be multiplied by signal based on the pitch-angular acceleration is too small, the unstable oscillation cannot be suppressed adequately. Thus, as in the above configuration (9), multiplying the signal based on the pitch-angular acceleration by a suitable gain makes it possible to restrict the unstable oscillation sufficiently and to restrict amplification of noise of the measurement data within an appropriate range.
(10) In some embodiments, in the above configuration (9), the second-signal calculation part is configured to determine the gain so as to be capable of damping resonance of an oil column having a resonance frequency generated in the hydraulically-driven pitch control system including the wind turbine blade, the hydraulic device, and the controller of from 2Hz to 20Hz.
   According to the findings of the present inventors, the natural frequency of the hydraulically-driven pitch control system including the wind turbine blade and the hydraulic cylinder is approximately 2 to 20 Hz in general. With the above configuration (10), it is possible to restrict unstable oscillation due to the feedback control for the pitch-angle adjustment in a wind turbine having the hydraulically-driven pitch control system of general configuration.
(11) In some embodiments, in the above configuration (9) or (10), the gain is set so as to change in accordance with the pitch-angle demand value or the actual value of the pitch angle.
   The length of the oil column of the hydraulic cylinder changes in accordance with the change in the pitch angle. Thus, since the natural frequency of the hydraulically-driven pitch control system changes depending on the pitch angle, and the stability margin of the control system also changes, the optimum gain varies in accordance with the pitch angle. With the above configuration (11), it is possible to restrict unstable oscillation suitably because a suitable gain corresponding to the pitch angle, i.e., corresponding to the natural frequency, is used.
(12) A method of controlling a wind turbine power generation facility according to at least one embodiment of the present invention is for a wind turbine power generation facility which includes: a wind turbine blade; and a pitch driving part which includes a hydraulic device having a hydraulic cylinder, a hydraulic valve, and a pressurize-oil source, and which is configured to change a pitch angle of the wind turbine blade by the hydraulic device. The method includes: a first-signal calculation step of calculating a first signal based on a difference between a pitch-angle demand value and an actual value of the pitch angle; a second-signal calculation step of calculating a second signal by subtracting a signal based on a pitch-angular acceleration of the wind turbine blade from the first signal; a command-value calculation step of calculating a command value which is to be provided for the hydraulic device, on the basis of the second signal; and a pitch-angle adjustment step of adjusting the pitch angle by providing the hydraulic device with the command value and controlling the pitch driving part.

In the feedback control of the pitch angle of the wind turbine blade, a signal that is fed back to the controller is affected by the characteristics of the hydraulic cylinder and the wind turbine blade which are to be controlled. For instance, the feedback signal to the controller may include an oscillation component of a specific natural frequency corresponding to the elasticity of the working oil in the hydraulic cylinder or the inertia of the wind turbine blade. In this case, if a gain in the feedback control is increased, unstable oscillation (oil-column resonance) may occur in the wind turbine blade at the above mentioned natural frequency within a certain range of the pitch angle, and hunting of the pitch angle may occur.

With the above method (12), the signal based on the pitch-angular acceleration is subtracted from the first signal possibly containing a component of the unstable oscillation of the wind turbine blade pitch and damping is applied to the pitch control system, which makes it possible to restrict the unstable oscillation.

While it is possible to prevent unstable oscillation of a wind turbine blade without subtracting a signal based on the pitch-angular velocity from a feedback signal as described in the above (12) by making the gain in the feedback control adequately small, the responsibility of the pitch-angle control would decrease in this case. In this regard, with the above method (12), it is possible to restrict the unstable oscillation of the wind turbine blade pitch even in a case where the gain in the feedback control is set within a range where the control responsibility can be maintained.

According to at least one embodiment of the present invention, it is possible to provide a wind turbine power generation facility whereby it is possible to restrict unstable oscillation caused by a feedback control for pitch-angle adjustment.

### BRIEF DESCRIPTION OF DRAWINGS

FIG. 1 is an overall schematic configuration diagram of a wind turbine power generation facility according to one embodiment.
FIG. 2 is a schematic configuration diagram of a pitch driving device according to one embodiment.
FIG. 3 is a configuration diagram of a controller according to one embodiment.
FIG. 4 is a diagram illustrating a control flow of a wind turbine power generation facility according to one embodiment.
FIG. 5 is a block diagram of a pitch angle control in a wind turbine power generation facility according to one embodiment.
FIG. 6 is an example of a Bode diagram of a pitch system according to one embodiment.
FIG. 7 is an example of a Bode diagram of a pitch system according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

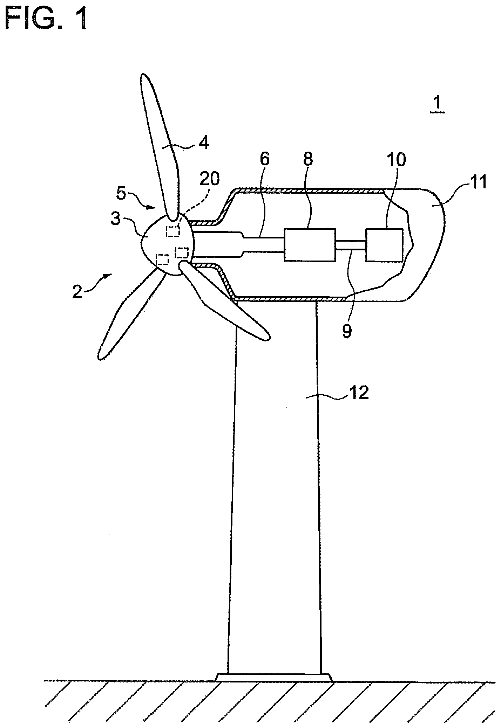

Firstly, the overall configuration of a wind turbine power generation facility according to one embodiment of the present invention will be described. FIG. 1 is an overall schematic configuration diagram of a wind turbine power generation facility according to one embodiment. As illustrated in the drawing, the wind turbine power generation facility 1 includes a rotor 2 including a hub 3 with wind turbine blades 4 mounted thereto and a rotational shaft 6 coupled to the hub 3, a generator 10, and a drivetrain 8 for transmitting rotation energy of the rotor 2 to the generator 10 via a rotation shaft 9. The generator 10 is configured to be driven by the rotational energy of the rotor 2 transmitted by the drivetrain 8.

In this wind turbine power generation facility 1, when the entire rotor 2 rotates by the force of wind received by the wind turbine blades 4, the rotation is inputted to the drivetrain 8 via the rotational shaft 6. The rotation inputted from the rotational shaft 6 is transmitted to the generator 10 by the drivetrain 8 via the rotation shaft 9. The drivetrain 8 may be a speed increasing unit configured to increase the speed of the rotation inputted from the rotational shaft 6. The drivetrain 8 may be a hydraulic drivetrain including a hydraulic pump, a highpressure oil line, a low-pressure oil line and a hydraulic motor, or a speed increasing unit of mechanical type (gear type).

Further, the wind turbine power generation facility 1 may be a wind turbine power generation facility of direct-drive type in which the hub 3 and the generator 10 are directly coupled to each other and not via the drivetrain 8.

The drivetrain 8 and the generator 10 may be housed inside a nacelle 11 supported on a tower 12. The tower 12 may be disposed on a base on water or on land.

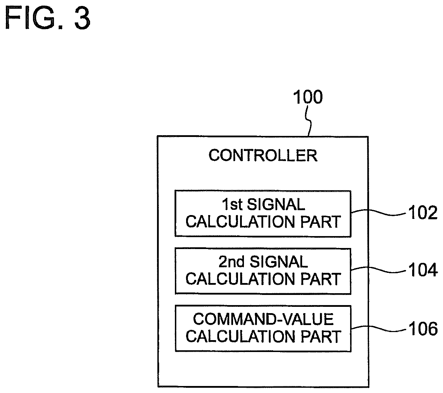

The wind turbine power generation facility 1 further includes a pitch driving part 20 configured to change the pitch angles of the wind turbine blades 4, and a controller 100 (see FIG. 3) configured to control the pitch driving part 20.

As in the embodiment illustrated in FIG. 1, in the wind turbine power generation facility 1 including a plurality of wind turbine blades 4 (three in the example illustrated in FIG. 1), the pitch driving part 20 may be provided for each of the wind turbine blades 4 so that each pitch driving part 20 changes the pitch angle of the corresponding one of the wind turbine blades 4. In this case, the controller 100 may be configured to control each of the pitch driving parts 20 individually from one another.

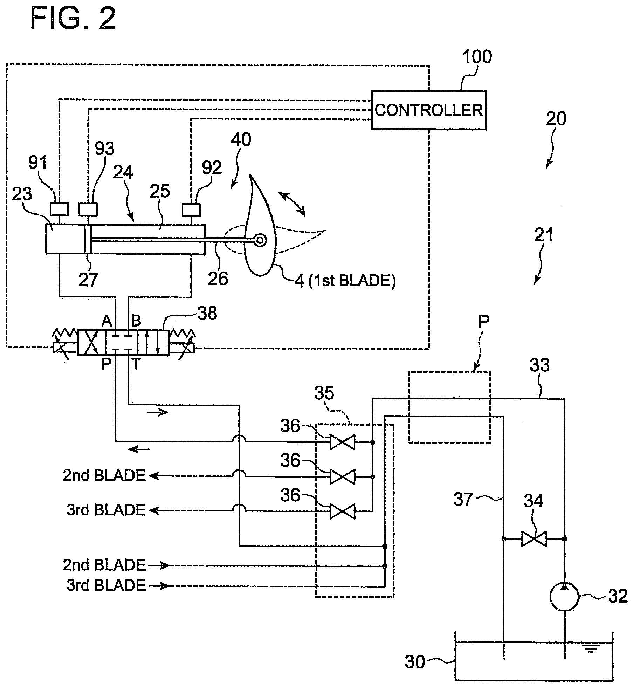

Next, with reference to FIGs. 2 and 3, the pitch driving part 20 will be described. FIG. 2 is a schematic configuration diagram of a pitch driving part according to one embodiment.

As illustrated in FIG. 2, the pitch driving part 20 includes a hydraulic device 21 for adjusting the pitch angle of the wind turbine blade 4. The hydraulic device 21 includes a hydraulic cylinder 24, a hydraulic valve 38, and a hydraulic pump 32 serving as a hydraulic source. The hydraulic device 21 further includes an oil tank 30 for storing oil, and a supply line 33 disposed between the hydraulic pump 32 and the hydraulic cylinder 24 so as to supply the oil stored in the oil tank 30 to the hydraulic cylinder 24.

The hydraulic cylinder 24 and the hydraulic valve 38 are provided for each of the wind turbine blades 4. While only the first blade of the three wind turbine blades 4 is illustrated in FIG. 2, the second blade and the third blade are each equipped with the hydraulic cylinder 24 and the hydraulic valve 38 similarly to the first blade. Further, the hydraulic cylinder 24 is disposed on a blade root portion 5 of each of the wind turbine blades 4.

Working oil is stored in the oil tank 30 and pressurized by the hydraulic pump 32 to be supplied to the hydraulic valve 38 and the hydraulic cylinder 24 provided for each of the wind turbine blades 4, through the supply line 33 and via a distribution block 35 and a flowrate adjustment valve 36.

The oil from the hydraulic cylinder 24 provided for each of the wind turbine blades 4 is returned to the oil tank through a return line 37. Further, the supply line 33 and the return line 37 may be connected via a relief valve 34 so that the pressurized oil is discharged to the return line 37 via the relief valve when the pressure of the supply line 33 exceeds a prescribed value so as to prevent the pressure of the supply line 33 from becoming excessive.

The hydraulic cylinder 24 includes the first cylinder chamber 23 and the second cylinder chamber 25 partitioned by a piston 27 that slides inside the hydraulic cylinder 24. The hydraulic cylinder 24 is configured such that the change of the pitch angle of the wind turbine blade 4 can be switched between a change toward the fine side and a change toward the feather side, by switching the oil supply between supply to the first cylinder chamber 23 and supply to the second cylinder chamber 25. Specifically, each wind turbine blade 4 is connected to the piston rod 26 of the hydraulic cylinder 24, so that when the piston 27 moves in accordance with the amount of oil supplied to the first cylinder chamber 23 or the second cylinder chamber 25, the pitch angle of the wind turbine blade 4 connected to the piston rod 26 changes between the fine side and the feather side in accordance with the movement of the piston 27.

The hydraulic valve 38 is disposed in the supply line 33, so that the amount of oil supplied to the hydraulic cylinder 24 is adjustable, and the recipient of the oil supply is switchable between the first cylinder chamber 23 and the second cylinder chamber 25.

The hydraulic valve 38 receives a command value (electric-current command value) for adjusting the pitch angle of the wind turbine blade 4 from the controller 100 and switches a hydraulic channel in accordance with a direction into which the pitch angle of the wind turbine blade 4 is to be changed on the basis of the received electric-current command value, as well as controlling the flow rate of the working oil that is to be supplied to the hydraulic cylinder 24.

Adjusting the recipient and the amount of oil supply using the above hydraulic valve 38 makes it possible to adjust the pitch angle of the wind turbine blade 4 optionally by a desirable amount in accordance with the amount of oil supply.

In one embodiment, the hydraulic valve 38 is a solenoid proportional control valve capable of controlling the direction by applying input current to one of two solenoids and of controlling the magnitude of the flow rate by changing the magnitude of the input current.

The wind turbine power generation facility 1 includes a sensor for measuring an actual value or a physical quantity that represents the pitch angle or the pitch-angular velocity of the wind turbine blade 4. The pitch angle of the wind turbine blade 4 changes in accordance with the stroke value of the hydraulic cylinder 24. Thus, the stroke value of the hydraulic cylinder 24 is a physical quantity that represents the pitch angle of the wind turbine blade 4. Further, the pitch-angular velocity of the wind turbine blade 4 changes in accordance with the stroke change rate of the hydraulic cylinder 24. Thus, the stroke change rate of the hydraulic cylinder 24 is a physical quantity that represents the pitch-angular velocity of the wind turbine blade 4.

In one embodiment, the above sensor is a sensor 93 (see FIG. 2) configured to measure the stroke value of the hydraulic cylinder 24. In another embodiment, the sensor is a sensor configured to measure the stroke change rate of the hydraulic cylinder 24.

Further, the wind turbine power generation facility 1 includes pressure sensors (91, 92; see FIG. 2) for measuring the pressures inside the hydraulic cylinder 24. The pressure sensor 91 is a sensor for measuring the pressure of the first cylinder chamber 23, and the pressure sensor 92 is a sensor for measuring the pressure of the second cylinder chamber 25.

The measurement results obtained by the pressure sensors (91, 92) and the sensor 93 for measuring the physical quantity representing the pitch angle or the pitch-angular velocity of the wind turbine blade 4 can be used in the control of the pitch driving part 20 performed by the controller 100 described below.

The pitch driving part 20 is controlled by the controller 100. Next, with reference to FIGs. 3 to 7, the control of the pitch driving part 20 by the controller 100 will be described.

FIG. 3 is a configuration diagram of a controller according to one embodiment. As illustrated in the drawing, the controller 100 includes a first-signal calculation part 102, a second-signal calculation part 104, and a command-value calculation part 106.

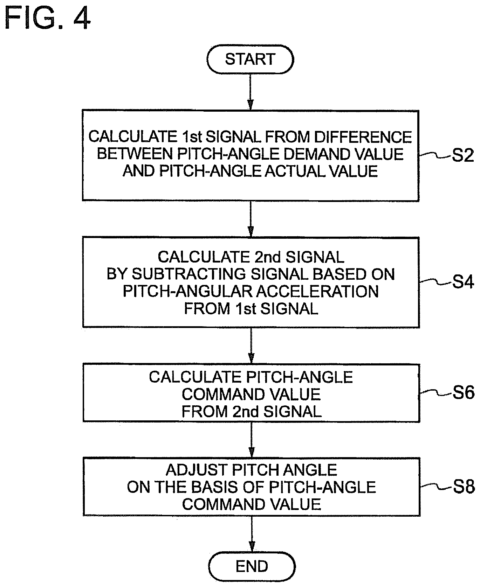

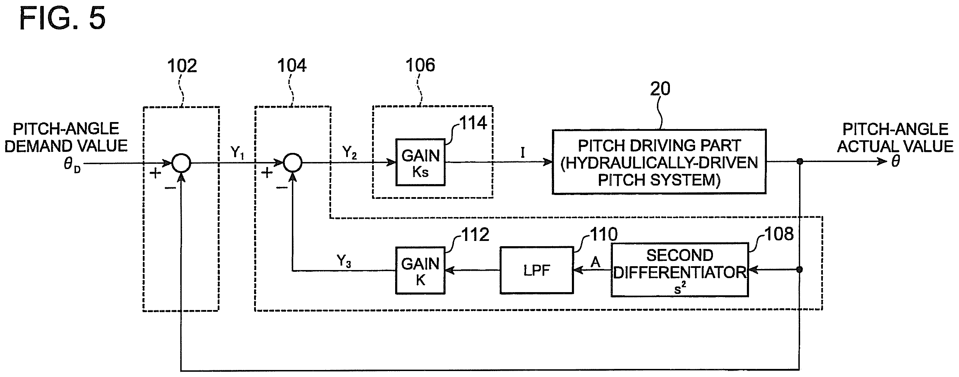

The control flow for the pitch driving part 20 using the controller 100 will be described with reference to FIGs. 4 and 5. FIG. 4 is a diagram illustrating a control flow of a wind turbine power generation facility according to one embodiment. FIG. 5 is a block diagram of a pitch angle control in a wind turbine power generation facility according to one embodiment.

An overview of the control flow of a wind turbine power generation facility according to one embodiment is as follows. First, the first-signal calculation part 102 calculates the first signal (Y₁ in FIG. 5) based on a difference between a pitch-angle demand value θ_{D} and an actual value θ of the pitch angle (S2). Next, the second-signal calculation part 104 calculates the second signal (Y₂ in FIG. 5) by subtracting the signal Y₃ based on the pitch-angular acceleration of the wind turbine blade 4 from the first signal calculated in S2 (S4).

Next, the command-value calculation part 106 calculates a command value (I in FIG. 5) that is to be given to the hydraulic device 21 on the basis of the second signal calculated in S4 (S6). The command value I is the electric-current command value that is to be given to the hydraulic valve 38 (pitch driving part 20) to adjust the pitch angle.

The command value I calculated by the hydraulic device 21 in S6 is given to the pitch driving part 20 to control the pitch driving part 20, and thereby the pitch angle of the wind turbine blade 4 is adjusted (S8).

In the feedback control of the pitch angle of the wind turbine blade 4, a signal that is fed back to the controller 100 is affected by the characteristics of the hydraulic cylinder 24 and the wind turbine blade 4 which are to be controlled. For instance, the feedback signal to the controller 100 may include an oscillation component of a specific natural frequency corresponding to the elasticity of the working oil in the hydraulic cylinder 24 or the inertia of the wind turbine blade 4. In this case, if a servo gain (gain Ks (block 114) in FIG. 5) in the feedback control is increased, unstable oscillation (oil-column resonance) may occur in the wind turbine blade 4 at the above mentioned natural frequency within a certain range of the pitch angle, and hunting of the pitch angle may occur.

In one embodiment, the natural frequency that generates the unstable oscillation (hydraulic resonance) is a natural frequency of the hydraulically-driven pitch control system including the wind turbine blade 4, the hydraulic device 21 including the hydraulic cylinder 24, and the controller 100.

Thus, the second-signal calculation part 104 subtracts the signal based on the pitch-angular acceleration from the first signal Y₁ possibly containing a component of the unstable oscillation of the wind turbine blade pitch and applies damping to the pitch control system, thereby calculating the second signal Y₂ for restricting the unstable oscillation.

In the block diagram of FIG. 5, the signal based on the pitch-angular acceleration subtracted from the first signal Y₁ to obtain the second signal Y₂ is represented as Y₃ (a signal obtained as a result of passage through blocks 110 and/or 112 after 108).

The pitch-angular acceleration for applying damping to the pitch control system is calculated from the actual value of the pitch angle obtained by the sensor provided for the wind turbine power generation facility 1 or a physical quantity representing the pitch-angular velocity.

In one embodiment, the pitch-angular acceleration is calculated from the stroke value of the hydraulic cylinder 24 obtained by the sensor 93. More specifically, the pitch-angular acceleration is calculated by obtaining the actual value of the pitch angle of the wind turbine blade 4 on the basis of the stroke value of the hydraulic cylinder 24, and calculating the second differential of the actual value.

In another embodiment, the pitch-angular acceleration is calculated from the stroke change rate of the hydraulic cylinder 24 obtained by a sensor provided for the wind turbine power generation facility 1. More specifically, the pitch-angular acceleration is calculated by obtaining the pitch-angular velocity of the wind turbine blade 4 on the basis of the stroke change rate of the hydraulic cylinder 24, and calculating the first differential of the pitch-angular velocity.

In one embodiment, the second signal Y₂ may be obtained by subtracting a signal based on an index representing the pitch-angular acceleration as the signal Y³ based on the pitch-angular acceleration from the first signal Y₁. For instance, an index representing the pitch-angular acceleration can be calculated by calculating a cylinder thrust force from the pressure sensors (91, 92) for measuring the pressures inside the hydraulic cylinder 24 and the cylinder area of the hydraulic cylinder 24, and dividing the cylinder thrust force by the inertia of the pitch system including the wind turbine blade 4 and the hydraulic cylinder 24 constituting a part of the pitch driving part 20.

The second-signal calculation part 104 includes a low-pass filter 110 configured to eliminate or reduce a frequency component which is equal to or more than a set cutoff frequency. Further, the second-signal calculation part 104 filters the pitch-angular acceleration of the wind turbine blade 4 to eliminate or reduce a frequency component which is equal to or more than the cutoff frequency, and calculates the second signal (Y₂) by subtracting, from the first signal (Y₁), the signal Y₃ based on the pitch-angular acceleration processed by the above filtering.

The above mentioned cutoff frequency is set to a value larger than a natural frequency of the hydraulically-driven pitch control system that generates the hydraulic resonance.

In the block diagram of FIG. 5, the low-pass filter is represented as LPF (block 110).

In a case where the pitch control system calculates the signal Y₃ based on the pitch-angular acceleration on the basis of the pitch-angular acceleration, for instance, calculating the second differential of the actual value of the pitch angle measured by a sensor or calculating the first differential of the physical amount of the pitch-angular velocity may increase the high-frequency noise of the original measurement data.

In view of this, from the pitch-angular acceleration that can be obtained by e.g. the actual value and a physical amount of the pitch angle of the wind turbine blade 4, a component having a frequency larger than the natural frequency of the hydraulically-driven pitch control system is eliminated or reduced by the low-pass filter 110. As a result, it is possible to eliminate or reduce noise of the higher-frequency wave region than the natural frequency of the hydraulically-driven pitch control system, and to restrict the unstable oscillation of the wind turbine blade pitch adequately without reducing the pitch-angular acceleration in the vicinity of the natural frequency of the hydraulically-driven pitch control system.

The cutoff frequency of the low-pass filter 110 is set to a value larger than a natural frequency of the hydraulically-driven pitch control system that generates the hydraulic resonance. For instance, the cutoff frequency of the low-pass filter 110 is set to a value larger than a natural frequency of the hydraulically-driven pitch control system by approximately 5 to 20 Hz.

Further, the second-signal calculation part 104 is configured to calculate the second signal Y₂ by subtracting, from the first signal Y₁, the signal Y₃ based on the pitch-angular acceleration calculated by multiplying the pitch-angular acceleration by a suitable gain (K). In the block diagram of FIG. 5, the gain to be multiplied by the pitch-angular acceleration to calculate a signal that is to be subtracted from the first signal Y₁ is represented as K (block 112).

If the gain (K) to be multiplied by the pitch-angular acceleration is increased, while the effect to restrict the unstable oscillation improves, the noise derived from the measurement data obtained by the sensor 93 or the like would be amplified even further. On the other hand, if the gain (K) to be multiplied by the pitch-angular acceleration is too small, the unstable oscillation cannot be suppressed adequately.

As described above, with the pitch-angular acceleration being multiplied by a suitable gain (K) at the second-signal calculation part 104, it is possible to restrict the unstable oscillation adequately while restricting the amplification of the noise of the measurement data within an appropriate range.

In the block diagram illustrated in FIG. 5, the second-signal calculation part 104 calculates the signal Y₃ based on the pitch-angular acceleration by multiplying a filtered signal by the gain K (112), the filtered signal obtained by filtering, using the low-pass filter (110), pitch-angular acceleration A which is a pitch-angle actual value θ processed by a second-order differentiator (s², 108).

In the second-signal calculation part 104, either one of the following may be executed first: filtering by the low-pass filter (110); or the multiplication of the gain K (112). That is, in the second-signal calculation part 104, the signal Y₃ based on the pitch-angular acceleration can be also calculated by filtering a signal obtained by multiplying the pitch-angular acceleration A by the gain K (112) using the low-pass filter (110).

In the second-signal calculation part 104, the gain (K) that is to be multiplied by the pitch-angular acceleration may be set so as to change in accordance with the demand value θ_{D} of the pitch angle or the actual value θ of the pitch angle.

The length of the oil column of the hydraulic cylinder 24 changes in accordance with the change in the pitch angle of the wind turbine blade 4. Thus, since the natural frequency of the hydraulically-driven pitch control system changes depending on the pitch angle, and the stability margin of the control system also changes, the optimum gain (K) that is to be multiplied by the pitch-angular acceleration A for restricting unstable oscillation varies in accordance with the pitch angle of the wind turbine blade 4. Thus, it is possible to restrict unstable oscillation by using the suitable gain (K) corresponding to the pitch angle of the wind turbine blade 4, i.e., corresponding to the natural frequency of the hydraulically-driven pitch control system.

In some embodiments, the second-signal calculation part 104 is configured to determine the gain (K) so as to be capable of damping oil column resonance which has a resonance frequency generated in the hydraulically-driven pitch control system of from 2Hz to 20Hz. In this case, it is possible to restrict unstable oscillation due to the feedback control of the pitch angle adjustment in the wind turbine power generation facility 1 where the hydraulically-driven pitch control system including the wind turbine blade 4 and the hydraulic cylinder 24 has a natural frequency of approximately 2 to 20Hz.

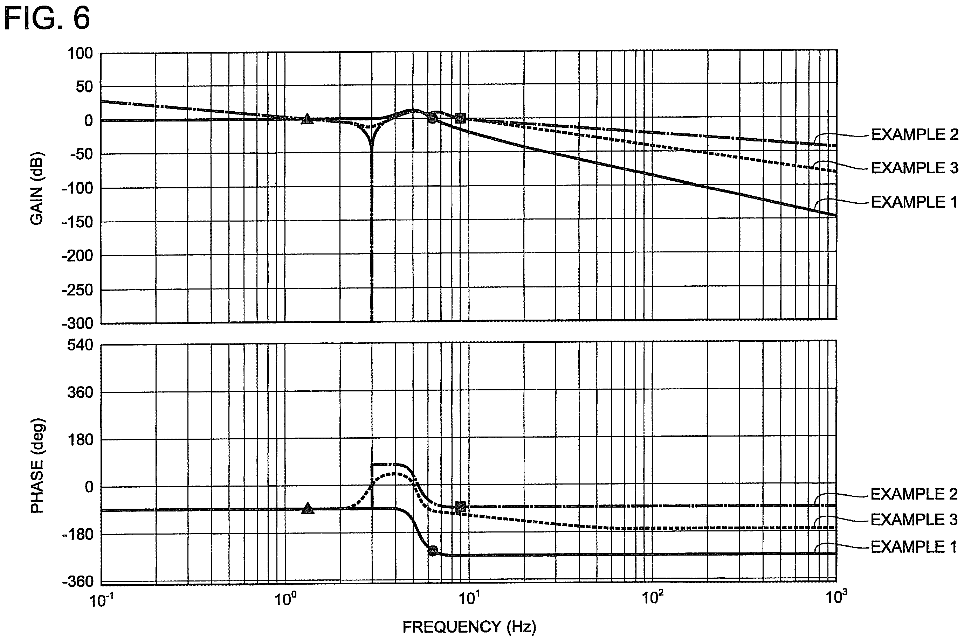

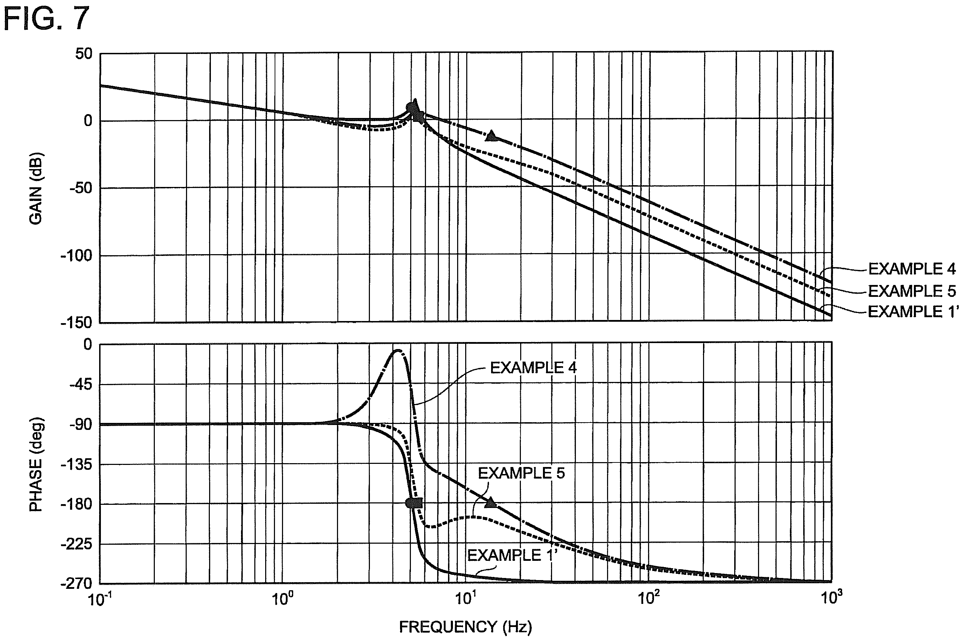

With reference to FIGs. 6 and 7, reduction of the unstable oscillation in the wind turbine power generation facility 1 according to one embodiment will be described. FIGs. 6 and 7 are each an example of a Bode diagram of a pitch system according to one embodiment.

In FIG. 6, illustrated is a Bode diagram of cases in which each of the acceleration feedback and the low-pass filter either exists or does not exist (the following three cases: examples 1 to 3 shown in the following Table 1) in the pitch-angle control system, where the pitch-angle feedback control is performed as a premise in each case.

Herein, "pitch-angle feedback" refers to a pitch-angle feedback control in which the signal (Y₁) based on a difference between a pitch-angle demand value and a pitch-angle actual value is used as a control signal. Further, "acceleration feedback" refers to a control that uses the second signal Y₂ obtained by subtracting the signal Y₃ based on the pitch-angular acceleration from the first signal Y₁. The pitch-angular acceleration is obtained by calculating the second differential of the pitch angle. "LPF" is a filtering process that eliminates or reduces a frequency component that is equal to or more than a cutoff frequency larger than the natural frequency of the hydraulically-driven pitch control system from the pitch-angular acceleration using a low-pass filter. In the examples 1 to 5 illustrated in FIGs. 6 and 7, the natural frequency of the hydraulically-driven pitch control system is assumed to be approximately 5 to 10Hz, and the cutoff frequency of the low-pass filter is set to 15Hz.

Specifically, the example 1 in the following Table 1 is a comparison example showing a case in which the pitch-angle feedback control is performed without performing the acceleration feedback according to the embodiments of the present invention. The examples 2 and 3 show cases in which the acceleration feedback according to the embodiments of the present invention is performed as well as the pitch-angle feedback control.

**[Table 1]**

| | PITCH-ANGLE FEEDBACK | ACCELERATION FEEDBACK | LPF |
|---|---|---|---|
| EXAMPLE 1 (comparison ex.) | YES | NO | NO |
| EXAMPLE 2 | YES | YES | NO |
| EXAMPLE 3 | YES | YES | YES |

In the Bode diagram, at the frequency at which the gain (shown in the upper graph of FIGs. 6 and 7) becomes 0dB, if the phase (shown in the lower graph of FIGs. 6 and 7) is less than minus 180°, it can be determined that the pitch control system is unstable.

In the Bode diagram in FIG. 6, the point of the frequency at which the gain becomes 0dB in each example is marked in the upper and lower graphs.

According to the Bode diagram of FIG. 6, in example 1, at the frequency at which the gain becomes 0dB, the phase is less than minus 180°. Thus, it can be determined that the pitch control system is unstable in a case where the pitch-angle feedback control is performed without performing the acceleration feedback according to the embodiments of the present invention. On the other hand, in examples 2 and 3 adopting the acceleration feedback according the embodiments of the present invention, at the frequency at which the gain becomes 0dB, the phase is not less than minus 180°. Thus, it can be determined that the pitch control system is stable.

Meanwhile, in the upper graph showing the gains in FIG. 6, the differences between the gains of examples 2 and 3 and the gain of example 1 become larger as the frequency becomes higher. This is because noise is amplified at higher frequency in examples 2 and 3 due to differentiation of the pitch angle in obtaining the pitch-angular acceleration.

Further, when examples 2 and 3 are compared to each other, the gain of example 3 is lower than the gain of example 2 at the high-frequency range. This means that the amplification of the noise in the high-frequency range is suppressed in example 2, where the low-pass filter is applied to the pitch-angular acceleration.

As described above, applying the low-pass filter to the pitch-angular acceleration makes it possible to provide a stable pitch-control system whereby noise of the higher-frequency region than the natural frequency of the hydraulically-driven pitch control system is eliminated or reduced, and unstable oscillation of the wind turbine blade pitch is restricted adequately in the vicinity of the natural frequency of the hydraulically-driven pitch control system without reducing the signal Y₃ based on the pitch-angular acceleration.

FIG. 7 is a Bode diagram obtained by varying the value of the gain (K) by which the pitch-angular acceleration is multiplied in the pitch control system. The conditions for the control in each example (examples 1', 4, and 5) are as shown in the following Table 2.

Examples 4 and 5 show cases in which the acceleration feedback according to the embodiments of the present invention is performed as well as the pitch-angle feedback control. Examples 4 and 5 are different in the value of the gain (K) by which the pitch-angular acceleration is multiplied. The gain K₁ in example 4 and the gain K₂ in example 5 satisfy the relationship of K₁ > K₂.

Further, example 1' is a comparison example showing a case in which the pitch-angle feedback control is performed without performing the acceleration feedback according to the embodiments of the present invention. The setting conditions for the low-pass filter (LPF) in examples 4 and 5 are the same as those set for the above example 3.

**[Table 2]**

| | PITCH-ANGLE FEEDBACK | ACCELERATION FEEDBACK (gain K) | LPF |
|---|---|---|---|
| EXAMPLE 1' (comparison ex.) | YES | NO | NO |
| EXAMPLE 4 | YES | YES(K₁ *) | YES |
| EXAMPLE 5 | YES | YES(K₂ *) | YES |

| | | | |
|---|---|---|---|
| * Note: K₁>K₂ | | | |

In the Bode diagram, at the frequency at which the phase (shown in the lower graphs of FIGs. 6 and 7) becomes minus 180°, if the gain (shown in the upper graphs of FIGs. 6 and 7) is greater than 0dB, it can be determined that the pitch control system is unstable.

In the Bode diagram in FIG. 7, the point of the frequency at which the phase becomes minus 180° in each example is marked in the upper and lower graphs.

According to the Bode diagram of FIG. 7, in example 4 adopting the acceleration feedback according the embodiments of the present invention, at the frequency at which the phase becomes minus180°, the gain is not greater than OdB. Thus, it can be determined that the pitch control system is stable.

On the other hand, in example 5, even though the same control system as that in example 4 is used, the gain is greater than 0dB at the frequency at which the phase becomes minus 180°. This is because, the gain K₂ used in example 5 as the gain (K) by which the pitch-angular acceleration is multiplied is smaller than the gain K₁ in example 4, and thus sufficient damping cannot be applied to the pitch control system by the acceleration feedback using the pitch-angular acceleration. Therefore, to restrict unstable oscillation of the pitch control system sufficiently, the gain (K) by which the pitch-angular acceleration is multiplied needs to have a certain magnitude.

However, increasing the gain (K) by which the pitch-angular acceleration is multiplied leads to amplification of noise in the high-frequency range. Thus, it is desirable to keep the gain (K) as small as possible.

In view of the above, there is an appropriate range of the gain (K) by which the pitch-angular acceleration is multiplied, and multiplying the pitch-angular acceleration by a suitable gain (K) makes it possible to restrict amplification of noise of measurement data within an appropriate range as well as stabilizing the pitch control system to restrict unstable oscillation sufficiently.

In example 1' of FIG. 7, which is a comparison example, the gain is greater than OdB at the frequency at which the phase becomes minus 180°. Thus, it can be determined that the pitch control system is unstable in a case where the pitch-angle feedback control is performed without performing the acceleration feedback according to the embodiments of the present invention.

Embodiments of the present invention were described in detail above, but the present invention is not limited thereto, and various amendments and modifications may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, in the present invention, an expression such as "comprise", "include", "have", "contain" and "constitute" are not intended to be exclusive of other components.

## Claims

1. A wind turbine power generation facility (1), comprising:
a wind turbine blade (4);
a pitch driving part (20) which includes a hydraulic device (21) having a hydraulic cylinder (24), a hydraulic valve (38), and a pressurized-oil source, and which is configured to change a pitch angle of the wind turbine blade (4) by the hydraulic device (21); and
a controller (100) configured to provide the hydraulic device with a command value to control the pitch driving part (20) so as to adjust the pitch angle,
wherein the controller (100) includes:
a first-signal calculation part (102) for calculating a first signal based on a difference between a pitch-angle demand value and an actual value of the pitch angle; **characterized in that** the controller (100) further includes:
a second-signal calculation part (104) for calculating a second signal by subtracting a signal based on a pitch-angular acceleration of the wind turbine blade from the first signal; and
a command-value calculation part (106) for calculating the command value to be provided to the hydraulic device (21) on the basis of the second signal.

2. The wind turbine power generation facility (1) according to claim 1, further comprising a sensor (93) for measuring the actual value of the pitch angle or a physical amount representing a pitch-angular velocity,
wherein the second-signal calculation part (104) is configured to:
calculate the pitch-angular acceleration from the physical amount; and
calculate the second signal by subtracting the signal based on the pitch-angular acceleration from the first signal.

3. The wind turbine power generation facility (1) according to claim 2,
wherein the sensor (93) is configured to measure a stroke value or a stroke change rate of the hydraulic cylinder (24), and
wherein the second-signal calculation part (104) is configured to calculate the pitch-angular acceleration from the stroke value or the stroke change rate.

4. The wind turbine power generation facility (1) according to any one of claims 1 to 3,
wherein the second-signal calculation part (104) is configured to calculate the second differential of the actual value of the pitch angle to obtain the pitch-angular acceleration.

5. The wind turbine power generation facility (1) according to claim 2 or 3,
wherein the second-signal calculation part (104) is configured to calculate the single differential of the pitch-angular velocity to obtain the pitch-angular acceleration.

6. The wind turbine power generation facility (1) according to claim 1, further comprising a pressure sensor (91, 92) for measuring a pressure in the hydraulic cylinder (24),
wherein the second-signal calculation part (104) is configured to:
calculate an index indicating the pitch-angular acceleration by dividing a cylinder thrust force calculated from the pressure and a cylinder area by an inertia of a pitch system including the wind turbine blade (4) and at least a part of the pitch driving part (20); and
calculate the second signal by subtracting, from the first signal, the signal based on a result of calculating the index.

7. The wind turbine power generation facility (1) according to claim 2, 3, or 5,
wherein the second-signal calculation part (104) is configured to calculate the second signal by filtering a result of calculating the pitch-angular acceleration from the actual value of the pitch angle or the physical amount representing the pitch-angular velocity of the wind turbine blade (4) to eliminate or reduce a frequency component that is not less than a cutoff frequency, and subtracting the filtered signal from the first signal, and
wherein the cutoff frequency is set to a value larger than a natural frequency of a hydraulically-driven pitch control system including the wind turbine blade (4), the hydraulic device (21), and the controller (100).

8. The wind turbine power generation facility (1) according to any one of claims 1 to 7,
wherein the hydraulic device (21) further includes an oil tank (30) for storing oil, and a supply line (33) disposed between the pressurized-oil source and the hydraulic cylinder (24), for supplying the oil stored in the oil tank to the hydraulic cylinder,
wherein the hydraulic cylinder (24) includes a first cylinder chamber (23) and a second cylinder chamber (25) and is configured to be capable of switching change of the pitch angle of the wind turbine blade (4) between a change toward a fine side and a change toward a feather side by switching the oil supply between to the first cylinder chamber (23) and to the second cylinder chamber (25), and
wherein the hydraulic valve (38) is disposed in the supply line (33) and configured to be capable of adjusting an amount of the oil supplied to the hydraulic cylinder (24) and switching recipient of the oil supply between the first cylinder chamber (23) and the second cylinder chamber (25).

9. The wind turbine power generation facility (1) according to claim 2, 3, 5, or 7,
wherein the second-signal calculation part (104) is configured to calculate the second signal by subtracting, from the first signal, a signal calculated by multiplying a result of calculating the pitch-angular acceleration from the actual value of the pitch angle or the physical amount representing the pitch-angular velocity by a suitable gain.

10. The wind turbine power generation facility (1) according to claim 9,
wherein the second-signal calculation part (104) is configured to determine the gain so as to be capable of damping resonance of an oil column having a resonance frequency generated in the hydraulically-driven pitch control system including the wind turbine blade (4), the hydraulic device (21), and the controller (100) of from 2Hz to 20Hz.

11. The wind turbine power generation facility (1) according to claim 9 or 10,
wherein the gain is set so as to change in accordance with the pitch-angle demand value or the actual value of the pitch angle.

12. A method of controlling a wind turbine power generation facility (1) which includes: a wind turbine blade (4); and a pitch driving part (20) which includes a hydraulic device (21) having a hydraulic cylinder (24), a hydraulic valve (38), and a pressurize-oil source, and which is configured to change a pitch angle of the wind turbine blade (4) by the hydraulic device, the method comprising:
a first-signal calculation step of calculating a first signal based on a difference between a pitch-angle demand value and an actual value of the pitch angle;
**characterized by** further comprising:
a second-signal calculation step of calculating a second signal by subtracting a signal based on a pitch-angular acceleration of the wind turbine blade from the first signal;
a command-value calculation step of calculating a command value which is to be provided for the hydraulic device, on the basis of the second signal; and
a pitch-angle adjustment step of adjusting the pitch angle by providing the hydraulic device with the command value and controlling the pitch driving part.

## Patentansprüche

1. Windturbinen-Stromerzeugungsanlage (1), umfassend:
ein Windturbinenblatt (4),
einen Winkeleinstellungsantriebsteil (20), der eine Hydraulikvorrichtung (21), die einen Hydraulikzylinder (24), ein Hydraulikventil (38) und eine Druckölquelle aufweist, beinhaltet und der dafür ausgelegt ist, einen Anstellwinkel des Windturbinenblatts (4) durch die Hydraulikvorrichtung (21) zu verändern, und
eine Steuerung (100), die dafür ausgelegt ist, der Hydraulikvorrichtung einen Befehlswert zur Steuerung des Winkeleinstellungsantriebsteils (20) bereitzustellen, um den Anstellwinkel anzupassen,
wobei die Steuerung (100) beinhaltet:
einen Berechnungsteil (102) für ein erstes Signal zur Berechnung eines ersten Signals basierend auf einer Differenz zwischen einem Anstellwinkel-Sollwert und einem Istwert des Anstellwinkels, **dadurch gekennzeichnet, dass** die Steuerung (100) ferner beinhaltet:
einen Berechnungsteil (104) für ein zweites Signal zur Berechnung eines zweiten Signals durch Subtraktion eines auf einer Anstellwinkelbeschleunigung des Windturbinenblatts basierenden Signals von dem ersten Signal, und
einen Berechnungsteil (106) für einen Befehlswert zur Berechnung des Befehlswertes, der der Hydraulikvorrichtung (21) bereitgestellt werden soll, auf der Grundlage des zweiten Signals.

2. Windturbinen-Stromerzeugungsanlage (1) nach Anspruch 1, ferner umfassend einen Sensor (93) zum Messen des Istwertes des Anstellwinkels oder einer physikalischen Größe, die eine Anstellwinkelgeschwindigkeit darstellt,
wobei der Berechnungsteil (104) für das zweite Signal dafür ausgelegt ist:
die Anstellwinkelbeschleunigung aus der physikalischen Größe zu berechnen und
das zweite Signal durch Subtraktion des auf der Anstellwinkelbeschleunigung basierenden Signals von dem ersten Signal zu berechnen.

3. Windturbinen-Stromerzeugungsanlage (1) nach Anspruch 2,
wobei der Sensor (93) dafür ausgelegt ist, einen Hubwert oder eine Hubänderungsrate des Hydraulikzylinders (24) zu messen, und
wobei der Berechnungsteil (104) für das zweite Signal dafür ausgelegt ist, die Anstellwinkelbeschleunigung aus dem Hubwert oder der Hubänderungsrate zu berechnen.

4. Windturbinen-Stromerzeugungsanlage (1) nach einem der Ansprüche 1 bis 3,
wobei der Berechnungsteil (104) für das zweite Signal dafür ausgelegt ist, das zweite Differential des Istwertes des Anstellwinkels zu berechnen, um die Anstellwinkelbeschleunigung zu erhalten.

5. Windturbinen-Stromerzeugungsanlage (1) nach Anspruch 2 oder 3,
wobei der Berechnungsteil (104) für das zweite Signal dafür ausgelegt ist, das einzelne Differential der Anstellwinkelgeschwindigkeit zu berechnen, um die Anstellwinkelbeschleunigung zu erhalten.

6. Windturbinen-Stromerzeugungsanlage (1) nach Anspruch 1, ferner umfassend einen Drucksensor (91, 92) zum Messen eines Drucks in dem Hydraulikzylinder (24),
wobei der Berechnungsteil (104) für das zweite Signal dafür ausgelegt ist:
einen Index, der die Anstellwinkelbeschleunigung angibt, durch Division einer Zylinderschubkraft, die aus dem Druck und einer Zylinderfläche berechnet wird, durch eine Trägheit eines Winkeleinstellungssystems, das das Windturbinenblatt (4) und mindestens einen Teil des Winkeleinstellungsantriebsteils (20) beinhaltet, zu berechnen, und
das zweite Signal durch Subtraktion, von dem ersten Signal, des auf einem Ergebnis der Berechnung des Indexes basierenden Signals zu berechnen.

7. Windturbinen-Stromerzeugungsanlage (1) nach Anspruch 2, 3 oder 5,
wobei der Berechnungsteil (104) für das zweite Signal dafür ausgelegt ist, das zweite Signal durch Filtern eines Ergebnisses der Berechnung der Anstellwinkelbeschleunigung aus dem Istwert des Anstellwinkels oder der physikalischen Größe, die die Anstellwinkelgeschwindigkeit des Windturbinenblatts (4) darstellt, um eine Frequenzkomponente zu erhalten, die nicht geringer als eine Grenzfrequenz ist, und durch Subtraktion des gefilterten Signals von dem ersten Signal zu berechnen, und
wobei die Grenzfrequenz auf einen Wert eingestellt ist, der größer ist als eine Eigenfrequenz eines hydraulisch angetriebenen Anstellwinkelsteuersystems, das das Windturbinenblatt (4), die Hydraulikvorrichtung (21) und die Steuerung (100) beinhaltet.

8. Windturbinen-Stromerzeugungsanlage (1) nach einem der Ansprüche 1 bis 7,
wobei die Hydraulikvorrichtung (21) ferner einen Öltank (30) zum Speichern von Öl und eine Versorgungsleitung (33), die zwischen der Druckölquelle und dem Hydraulikzylinder (24) angeordnet ist, zum Zuführen des in dem Öltank gespeicherten Öls zu dem Hydraulikzylinder beinhaltet,
wobei der Hydraulikzylinder (24) eine erste Zylinderkammer (23) und eine zweite Zylinderkammer (25) beinhaltet und so ausgelegt ist, dass er imstande ist, eine Änderung des Anstellwinkels des Windturbinenblatts (4), durch Umschalten der Ölzufuhr zwischen der ersten Zylinderkammer (23) und der zweiten Zylinderkammer (25), zwischen einer Änderung in Richtung einer Anströmseite und einer Änderung in Richtung einer Abströmseite umzuschalten, und
wobei das Hydraulikventil (38) in der Versorgungsleitung (33) angeordnet ist und so ausgelegt ist, dass es imstande ist, eine Menge des Öls, das dem Hydraulikzylinder (24) zugeführt wird, anzupassen und den Empfänger der Ölzufuhr zwischen der ersten Zylinderkammer (23) und der zweiten Zylinderkammer (25) umzuschalten.

9. Windturbinen-Stromerzeugungsanlage (1) nach Anspruch 2, 3, 5 oder 7,
wobei der Berechnungsteil (104) für das zweite Signal dafür ausgelegt ist, das zweite Signal durch Subtraktion, von dem ersten Signal, eines Signals, das durch Multiplikation eines Ergebnisses der Berechnung der Anstellwinkelbeschleunigung aus dem Istwert des Anstellwinkels oder der physikalischen Größe, die die Anstellwinkelgeschwindigkeit darstellt, mit einem geeigneten Verstärkungsfaktor berechnet wird, zu berechnen.

10. Windturbinen-Stromerzeugungsanlage (1) nach Anspruch 9,
wobei der Berechnungsteil (104) für das zweite Signal dafür ausgelegt ist, den Verstärkungsfaktor zu bestimmen, um imstande zu sein, eine Resonanz einer Ölsäule, die eine Resonanzfrequenz, die in dem hydraulisch angetriebenen Anstellwinkelsteuersystem, das das Windturbinenblatt (4), die Hydraulikvorrichtung (21) und die Steuerung (100) beinhaltet, erzeugt wird, von 2 Hz bis 20 Hz aufweist, zu dämpfen.

11. Windturbinen-Stromerzeugungsanlage (1) nach Anspruch 9 oder 10,
wobei der Verstärkungsfaktor so eingestellt ist, dass er sich gemäß dem Anstellwinkelsollwert oder dem Istwert des Anstellwinkels ändert.

12. Verfahren zum Steuern einer Windturbinen-Stromerzeugungsanlage (1), die ein Windturbinenblatt (4) und einen Winkeleinstellungsantriebsteil (20) beinhaltet, der eine Hydraulikvorrichtung (21), die einen Hydraulikzylinder (24), ein Hydraulikventil (38) und eine Druckölquelle aufweist, beinhaltet, und der dafür ausgelegt ist, einen Anstellwinkel des Windturbinenblatts (4) durch die Hydraulikvorrichtung zu verändern, das Verfahren umfassend:
einen Berechnungsschritt für ein erstes Signal des Berechnens eines ersten Signals basierend auf einer Differenz zwischen einem Anstellwinkel-Sollwert und einem Istwert des Anstellwinkels,
**dadurch gekennzeichnet, dass** es ferner umfasst:
einen Berechnungsschritt für ein zweites Signal des Berechnens eines zweiten Signals durch Subtraktion eines auf einer Anstellwinkelbeschleunigung des Windturbinenblatts basierenden Signals von dem ersten Signal,
einen Berechnungsschritt für einen Befehlswert des Berechnens eines Befehlswertes, der der Hydraulikvorrichtung bereitgestellt werden soll, auf der Grundlage des zweiten Signals, und
einen Anstellwinkel-Anpassungsschritt des Anpassens des Anstellwinkels durch Bereitstellen des Befehlswertes für die Hydraulikvorrichtung und Steuern des Winkeleinstellungsantriebsteils.

## Revendications

1. Installation de génération d'énergie à éolienne (1), comportant :
une pale d'éolienne (4) ;
une partie d'entraînement de pas (20) qui comprend un dispositif hydraulique (21) ayant un cylindre hydraulique (24), une soupape hydraulique (38), et une source d'huile sous pression, et qui est configurée pour changer un angle de pas de la pale d'éolienne (4) grâce au dispositif hydraulique (21) ; et
un dispositif de commande (100) configuré pour délivrer au dispositif hydraulique une valeur de commande pour commander la partie d'entraînement de pas (20) de façon à ajuster l'angle de pas,
dans laquelle le dispositif de commande (100) comprend :
une partie de calcul de premier signal (102) destinée à calculer un premier signal basé sur une différence entre une valeur de demande d'angle de pas et une valeur réelle de l'angle de pas ;
**caractérisée en ce que** le dispositif de commande (100) comprend en outre :
une partie de calcul de deuxième signal (104) destinée à calculer un deuxième signal en soustrayant du premier signal un signal basé sur une accélération angulaire de pas de la pale d'éolienne ; et
une partie de calcul de valeur de commande (106) destinée à calculer la valeur de commande devant être délivrée au dispositif hydraulique (21) sur la base du deuxième signal.

2. Installation de génération d'énergie à éolienne (1) selon la revendication 1, comportant en outre un capteur (93) destiné à mesurer la valeur réelle de l'angle de pas ou une quantité physique représentant une vitesse angulaire de pas,
dans laquelle la partie de calcul de deuxième signal (104) est configurée pour :
calculer l'accélération angulaire de pas à partir de la quantité physique ; et
calculer le deuxième signal en soustrayant du premier signal le signal basé sur l'accélération angulaire de pas.

3. Installation de génération d'énergie à éolienne (1) selon la revendication 2,
dans laquelle le capteur (93) est configuré pour mesurer une valeur de course ou un taux de changement de course du cylindre hydraulique (24), et
dans laquelle la partie de calcul de deuxième signal (104) est configurée pour calculer l'accélération angulaire de pas à partir de la valeur de course ou du taux de changement de course.

4. Installation de génération d'énergie à éolienne (1) selon l'une quelconque des revendications 1 à 3,
dans laquelle la partie de calcul de deuxième signal (104) est configurée pour calculer le deuxième différentiel de la valeur réelle de l'angle de pas pour obtenir l'accélération angulaire de pas.

5. Installation de génération d'énergie à éolienne (1) selon la revendication 2 ou 3,
dans laquelle la partie de calcul de deuxième signal (104) est configurée pour calculer la différentielle unique de la vitesse angulaire de pas pour obtenir l'accélération angulaire de pas.

6. Installation de génération d'énergie à éolienne (1) selon la revendication 1, comportant en outre un capteur de pression (91, 92) destiné à mesurer une pression dans le cylindre hydraulique (24),
dans laquelle la partie de calcul de deuxième signal (104) est configurée pour :
calculer un indice indiquant l'accélération angulaire de pas en divisant une force de poussée de cylindre calculée à partir de la pression et d'une section de cylindre par une inertie d'un système de pas comprenant la pale d'éolienne (4) et au moins une partie de la partie d'entraînement de pas (20) ; et
calculer le deuxième signal en soustrayant, du premier signal, le signal basé sur un résultat de calcul de l'indice.

7. Installation de génération d'énergie à éolienne (1) selon la revendication 2, 3, ou 5,
dans laquelle la partie de calcul de deuxième signal (104) est configurée pour calculer le deuxième signal en filtrant un résultat de calcul de l'accélération angulaire de pas à partir de la valeur réelle de l'angle de pas ou de la quantité physique représentant la vitesse angulaire de pas de la pale d'éolienne (4) pour éliminer ou réduire une composante de fréquence qui n'est pas inférieure à une fréquence de coupure, et en soustrayant le signal filtré du premier signal, et
dans laquelle la fréquence de coupure est établie à une valeur plus grande qu'une fréquence naturelle d'un système de commande de pas entraîné de manière hydraulique comprenant la pale d'éolienne (4), le dispositif hydraulique (21), et le dispositif de commande (100).

8. Installation de génération d'énergie à éolienne (1) selon l'une quelconque des revendications 1 à 7,
dans laquelle le dispositif hydraulique (21) comprend en outre un réservoir d'huile (30) destiné à stocker de l'huile, et une conduite d'alimentation (33) disposée entre la source d'huile sous pression et le cylindre hydraulique (24), pour délivrer au cylindre hydraulique l'huile stockée dans le réservoir d'huile,
dans laquelle le cylindre hydraulique (24) comprend une première chambre de cylindre (23) et une deuxième chambre de cylindre (25) et est configuré pour être capable de commuter un changement de l'angle de pas de la pale d'éolienne (4) entre un changement vers un côté de petit pas et un changement vers un côté de mise en drapeau en commutant l'alimentation en huile entre vers la première chambre de cylindre (23) et vers la deuxième chambre de cylindre (25), et
dans laquelle la soupape hydraulique (38) est disposée dans la conduite d'alimentation (33) et configurée pour être capable d'ajuster une quantité de l'huile délivrée au cylindre hydraulique (24) et de commuter un destinataire de l'alimentation en huile entre la première chambre de cylindre (23) et la deuxième chambre de cylindre (25) .

9. Installation de génération d'énergie à éolienne (1) selon la revendication 2, 3, 5, ou 7,
dans laquelle la partie de calcul de deuxième signal (104) est configurée pour calculer le deuxième signal en soustrayant, du premier signal, un signal calculé en multipliant un résultat de calcul de l'accélération angulaire de pas à partir de la valeur réelle de l'angle de pas ou de la quantité physique représentant la vitesse angulaire de pas par un gain approprié.

10. Installation de génération d'énergie à éolienne (1) selon la revendication 9,
dans laquelle la partie de calcul de deuxième signal (104) est configurée pour déterminer le gain de façon à être capable d'amortir une résonance d'une colonne d'huile ayant une fréquence de résonance générée dans le système de commande de pas entraîné de manière hydraulique comprenant la pale d'éolienne (4), le dispositif hydraulique (21), et le dispositif de commande (100) de 2Hz à 20Hz.

11. Installation de génération d'énergie à éolienne (1) selon la revendication 9 ou 10,
dans laquelle le gain est établi de façon à changer en fonction de la valeur de demande d'angle de pas ou de la valeur réelle de l'angle de pas.

12. Procédé de commande d'une installation de génération d'énergie à éolienne (1), qui comprend :
une pale d'éolienne (4) ; et une partie d'entraînement de pas (20) qui comprend un dispositif hydraulique (21) ayant un cylindre hydraulique (24), une soupape hydraulique (38), et une source d'huile sous pression, et qui est configurée pour changer un angle de pas de la pale d'éolienne (4) par le dispositif hydraulique, le procédé comportant :
une étape de calcul de premier signal destinée à calculer un premier signal sur la base d'une différence entre une valeur de demande d'angle de pas et une valeur réelle de l'angle de pas ;
**caractérisé en ce qu'**il comporte en outre :
une étape de calcul de deuxième signal destinée à calculer un deuxième signal en soustrayant du premier signal un signal basé sur une accélération angulaire de pas de la pale d'éolienne ;
une étape de calcul de valeur de commande destinée à calculer une valeur de commande qui doit être délivrée au dispositif hydraulique, sur la base du deuxième signal ; et
une étape de réglage d'angle de pas destinée à ajuster l'angle de pas en délivrant au dispositif hydraulique la valeur de commande et en commandant la partie d'entraînement de pas.
